Europäisches Patentamt

European Patent Office

Office européen des brevets

(19)

(11) Publication number: **0 163 742**
A1

# (12) EUROPEAN PATENT APPLICATION

published in accordance with Art. 158(3) EPC

(21) Application number: 84904167.8

(22) Date of filing: 13.11.84

Data of the international application taken as a basis:

(86) International application number: PCT/JP 84/00544

(87) International publication number: WO 85/02553 (20.06.85 85/14)

(51) Int. Cl.⁴: **B 01 D 29/34,** B 01 D 35/02, B 29 B 1/12, D 01 D 1/10

(30) Priority: 05.12.83 JP 188382/83 U
06.06.84 JP 84046/84 U
27.09.84 JP 145060/84 U

(43) Date of publication of application: 11.12.85
Bulletin 85/50

(84) Designated Contracting States: DE FR GB

(71) Applicant: MURAKAMI, Keiichi, 30-1, 5-602, Natsumicho 2-chome Funabashi-shi, Chiba 273 (JP)

(72) Inventor: MURAKAMI, Keiichi, 30-1, 5-602, Natsumicho 2-chome Funabashi-shi, Chiba 273 (JP)

(74) Representative: Patentanwälte TER MEER - MÜLLER - STEINMEISTER, Mauerkircherstrasse 45, D-8000 München 80 (DE)

(54) **FILTER APPARATUS FOR POLYMERS.**

(57) A polymer filtering apparatus includes a polymer pipe (12, 112) having a multiplicity of through-holes formed in its peripheral surface, and leaf filters (13, 113) and support members (14, 14a, 114, 114a) which are detachably and alternately laminated one upon another around the polymer pipe. Each leaf filter has a pair of filter members (21, 121) made of a filter medium which cannot bear filtering pressure. On the other hand, each support member has polymer-permeable support plates (25, 25a, 125, 125a) which respectively contact the filter members of the adjacent leaf filters from the outside thereof such as to support the filter members against filtering pressure. Thus, a polymer is filtered by passing from the inside to the outside of each leaf filter through the filter members and the support members. The leaf filters and the support members can be removed from the polymer pipe and, therefore, it is possible to wash them independently of each other.

0163742

DESCRIPTION

Polymer Filtration Apparatus

TECHNICAL FIELD

This invention relates to a polymer filtration apparatus for use in production of films or fibers of synthetic resins, such as polyesters or polyamides.

BACKGROUND ART

For production of fibers or films in high quality by extruding molten polymers through spinnerettes or dies, it is required to remove foreign materials from molten polymers. To meet requirement, various kinds of conventional filtration apparatus have been developed and used. For example, such a conventional representative filtration apparatus includes a polymer conduit provided with a number of through apertures open at the peripheral surface thereof, a number of disc-shaped leaf filters having a central opening having the polymer conduit inserted therethrough and removably received on and around the polymer conduit, and a casing enclosing the leaf filters. The disk-shaped leaf filter used in the prior-art filtration apparatus comprises a pair of thin circular filter elements fixed together at their peripheries by welding and not capable of withstanding filtration pressures, a pair of perforated plates disposed between the filter elements to support them, and a wire netting of large meshes disposed between the perforated plates to form a passage of polymer flow therein. The passage in the leaf filter communicates with the interior of the polymer conduit

- 1 -

through the apertures of the peripheral surfaces thereof, when the leaf filter is mounted around the polymer conduit. In filtration, molten polymer to be filtrated in the casing enters the interior of each leaf filter from the outside thereof through the filter elements and perforated plates, flows radially inwardly in the leaf filter into the center polymer conduit. During filtration, the circular filter elements are supported by the inner wire netting and perforated plates, since the filter elements do not have a sufficient rigidity capable of withstanding filtration pressure.

Since the leaf filters of this type have broad filtration areas and are capable of using sintered metals of fine meshes (or fine pores) as a filter element, they have a high efficiency of removal of foreign materials and are thus widely used. The leaf filters, however, have the disadvantages that when they are washed for re-use, it is difficult to completely clean up the filters, especially the inner side of the filter elements. More specifically, since the perforated plate contacts the inner side of each filter element, the unperforated portions of the plate block the flow of cleaning liquid so that the areas of the filter elements covered by the unperforated portions cannot be cleaned satisfactorily. In addition, when ultrasonic washing or water jet washing is applied, the power does not reach the inner side of the filter elements sufficiently so that the washing is not effective at the inner side of filter elements. On the other hand, since the inner side of the filter element of the conventional leaf

- 2 -

filter becomes a polymer flow-out side or a secondary side thereof, even if the filters are washed for re-use under condition that dirt or foreign materials remain on the secondary sides of the filter elements, the dirt or foreign materials would easily enter the filtrated polymer. For this reason, the secondary sides of the filter elements should be cleaned sufficiently, however, as mentioned above, excellent cleaning effect of the secondary sides of the filter elements can not be expected, resulting in a serious problem. Furthermore, the visual inspection, most desirable for washing the secondary side of the filter elements can not be performed because the secondary side of the conventional leaf filter faces the interior of the leaf filter and is covered by the perforated plates. This results in a further difficulty encountered in the conventional leaf filters.

Therefore, it is an object of the present invention to provide a novel polymer filtration apparatus capable of easily cleaning filter elements, especially on the second side, and visually inspecting the secondary side of the elements.

DISCLOSURE OF INVENTION

According to the present invention made to attain the above object, there is provided a polymer filtration apparatus including a polymer conduit provided with a number of apertures open at a peripheral surface thereof, a number of disc-shaped leaf filters having a central opening through which said polymer conduit is inserted, said leaf filters being removably received on and around said polymer conduit, each of said leaf filters having a pair of circular filter

- 3 -

0163742

elements which are not capable of withstanding filtration pressure and are axially spaced apart from each other, and a casing enclosing said leaf filters, characterized by disc-shaped supporting means removably sandwitched between adjacent leaf filters, said supporting means having on axially opposite sides thereof bearing surfaces which are permeable to polymer and adapted to contact and support said filter elements of said leaf filters, and a discharge passage formed between said bearing surfaces to allow filtrated polymer to flow therethrough, whereby polymer to be filtrated flows from the interior of said leaf filter through said filter element and the bearing elements of said supporting means.

In the filtration apparatus of above-mentioned construction, the disc-shaped leaf filters and disc-shaped supporting means which support the filter elements of the leaf filters against filtration pressure are formed as separable components. Therefore, when washing is performed, it is possible to separate leaf filters from supporting means so that they are washed separately and solely. For this reason, washing of the filter elements of the leaf filter is very easy. In addition, since the outer side of the leaf filter is the polymer flow-out side, the polymer flow-out side can be washed directly, and inspected visually. Due to the fact that both of the leaf filter and supporting means can be washed cleanly and easily, the repetitions of washing and re-use therefor can be increased so that the service life thereof can be increased.

- 4 -

0163742

BRIEF EXPLANATION OF DRAWINGS

Fig. 1 is a sectional view of a first embodiment of the present invention,

Fig. 2 is a plan view of a leaf filter 13 used in the above embodiment,

Fig. 3 is a sectional view of the leaf filter,

Fig. 4 is an enlarged sectional view showing a portion of the embodiment with the supporting elements 14, 14 being separated from the leaf filter 13,

Fig. 5 is a sectional view of a portion of a modification of the leaf filter 13,

Fig. 6 is a sectional view of the same portion as that shown in Fig. 4 but showing a modification 14a of the supporting element 14,

Fig. 7 is a sectional view taken along the line VII - VII in Fig. 6,

Fig. 8 is a sectional view of a second embodiment of the present invention,

Fig. 9 is an enlarged sectional view showing a portion of the second embodiment with the supporting elements 114, 114 being separated from the leaf filter 113,

Fig. 10 is a sectional view of the same portion as that shown in Fig. 9 but showing a modification 114a of the supporting element 114,

Fig. 11 is a sectional view taken along the line XI - XI in Fig. 10,

Fig. 12 and Fig. 13 are sectional views taken along the line XII - XII and the line XIII - XIII in Fig. 11,

- 5 -

0163742

respectively.

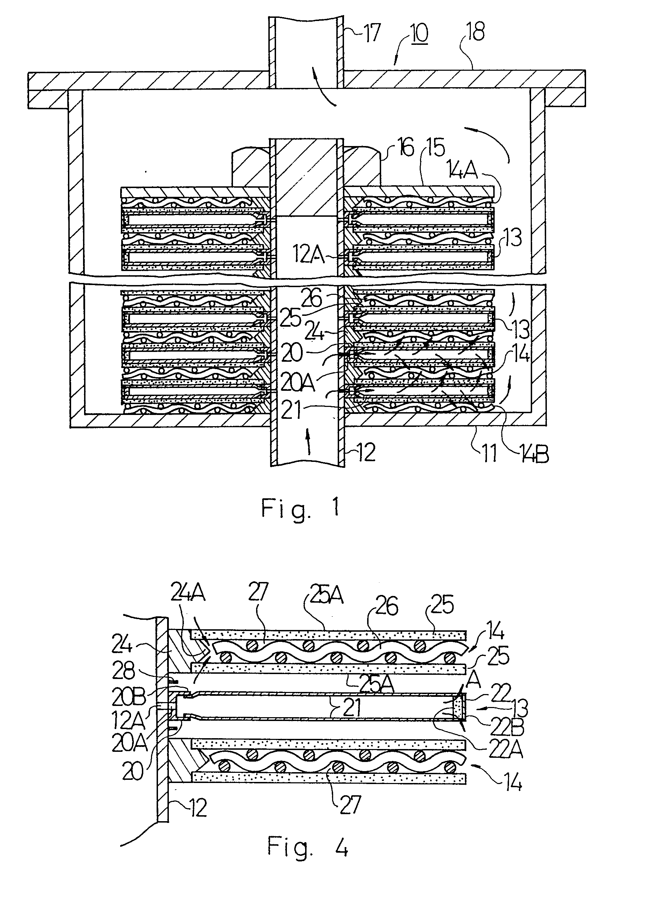

Fig. 1 shows a first embodiment according to the present invention.  A polymer filtration apparatus designated generally by reference numeral 1 includes a casing 11 and a polymer conduit 12 extending vertically and substantially at the center of the casing 11.  On and around the polymer conduit 12 are alternatively received a plurality of disc-shaped leaf filters 13 and a plurality of disc-shaped supporting elements 14.  The leaf filters 13 and the supporting elements 14 are fastened together by a press plate 15 and a nut 16 disposed at the top of the stack.  The upper end of the casing 11 is closed by a cover 18 having a polymer discharge pipe 17 attached to the central portion thereof. The polymer conduit 12 is provided with a number of through apertures 12A open at the peripheral surface thereof.

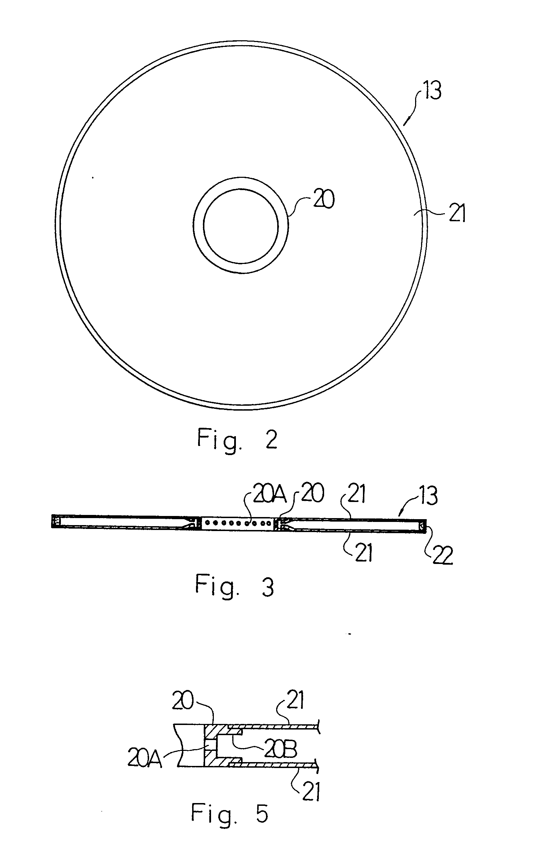

As shown generally in Figs. 2 and 3 and partially in Fig. 4 with an enlarged scale, the disc-shaped leaf filter 13 includes a first hub ring 20 having a central opening adapted to receive the polymer conduit 12, a pair of parallel circular filter elements 21, 21 attached to upper and lower flanges 20B of the first hub ring 20, and a closure means 22 closing the gap formed between the outer peripheries of the filter elements 21, 21.  The first hub ring 20 is formed with polymer inlet apertures 20A which respectively communicate with the apertures 12A formed in the peripheral wall of the polymer conduit 12 so that the interior of the leaf filter 13 is held in communication with the interior of the polymer conduit 12,

- 6 -

when the hub ring 20 is received on the conduit 12. As such a filter element 21, a fiber filter element used in the conventional leaf filter may preferably be is made by sintered non-woven fabric of fine metal filaments. The diameter of filaments forming the filter element 21, the average pore size of the filter element 21, the thickness of the element 21, etc. are determined properly, depending on the desired filtration efficiency, the easiness of washing, etc., and the average pore size is preferably 3 - 40$\mu$ and the thickness of the element 21 is 0.2 - 2mm. Such a filter element 21 does not have a sufficient rigidity to withstand filtration pressure. The filter element is not limited to such a fiber filter element. Sintered materials of metal particles or sintered materials of short metal fibers of about 5mm length, in which fibers are distributed in random directions but substantially horizontally may be preferably utilized as a filter elements. It is desirable to fix thin sintered wire nettings on opposite side surfaces of the sintered material to protect them.

The radially inner ends of the filter elements 21, 21 are fixed to the inner surfaces of the flanges 20B of the first hub ring 20 by welding or brazing. The welding or brazing can be easily effected by splitting the first hub ring 20 into upper and lower parts and welding or brazing the filter elements to the upper and lower parts respectively, before the two parts are welded together to form the integral hub ring 20. Instead of fixing the filter elements 21 to the inner surfaces of the flanges of the first hub ring 20 by welding or

- 7 -

brazing, the filter elements 21 may be fastened to the flanges 20B by suitable springs disposed between the two filter elements to urge them against the flanges. Furthermore, the filter element 21 may be fixed to the outer surface of the flange, as shown in Fig. 5, instead of on the inner surface of the flange. The first hub ring 20 may not necessarily formed in an integral structure and may be made by separable upper and lower parts to which the filter elements are fixed, respectively.

Referring to Fig. 4, the closure means for closing the gap between the outer peripheries of the filter elements 21, 21 comprises a ring 22A of a porous sintered metal and a weld metal 22B on the peripheral surface of the ring 22A. Though a solid metal ring may be used instead of the porous sintered metal ring 22A, the porous ring 22A is preferable because the ring 22A allows polymer to flow as shown by arrow A so that polymer would not be stagnated around the inner side of the ring 22A.

The disc-shaped supporting element 14 comprises a central second hub ring 24, a pair of substantially parallel support plates 25, 25 fixed to the second hub ring 24, for example, by welding, and a support member constituted by a wire netting 26 of large meshes disposed between the support plates 25, 25 to keep them spaced apart from each other to form therebetween a gap which acts as a discharge passage of polymer. The outer surfaces 25A, 25A of the support plates 25, 25 serve as polymer permeable bearing surfaces which contact the entire surfaces of the filter elements 21, 21 of the leaf filter 13

- 8 -

to bear the elements against the filtration pressure, when the supporting elements 14 are assembled as shown in Fig. 1. Though the support plate 25 bears the filter element during filtration, a single support plate 25 is not required to withstand the filtration pressure. The support plate 25 is required to have such rigidity that the support plate 25 itself can be supported by the wire netting 26 and bear the filter element 21 during filtration. The support plate 25 may be perforated to have a number of through apertures or porous sintered metals. In the present embodiment, a porous sintered metal is used. Since a perforated plate has non-permeable portions of considerably large area, it may cause stagnation of polymer around the non-permeable portions. But the porous sintered metal would hardly cause stagnation of polymer because the sintered metal has a number of fine pores or passages therein. Thus, the sintered metal is preferable as the support plate 25. It is preferabale to select the average pore size of the sintered metal larger than that of the filter element 21 so as to provide low flow resistance of polymer through the support plate 25 and to prevent pores of the support plate 25 from being blocked by solid particles contained in the polymer. It is possible to use the support plate 25 not only as a mere supporting means for the filter elements 21, 21 but also as a secondary filter element which serves to knead polymer and to capture and cut gels in the polymer. For this purpose, the average pore size is desirably small. From these points of view, the average pore size of the support plate 25 is preferably determined to be 20 - 100$\mu$,

- 9 -

and more preferably to be 30 - 60μ. The thickness of the support plate 25 is preferably 1 - 3mm. The sintered metal for the support plate 25 may be made of metal particles, short metal fibers or metal filaments. Among these materials, sintered metals made of metal particles of irregular shape having sharp edges, (for instance, such sintered metals are produced and sold by Shoketsu Kinzoku Kogyo Co., Ltd. under the name of "LAVAPORE") and sintered metals made of short metal fibers of irregular shape having sharp edges, (for instance, such sintered metals are also produced and sold by Shoketsu Kinzoku Kogyo Co., Ltd. under the name of "FIBER PORE") are desirable. These sintered metals are most useful for a secondary filter element because the void ratio thereof can be made large (for instance, about 50 - 70%) to make flow resistance small and the sharp edges in the sintered metals are effective to capture and cut gels in the polymer.

The second hub ring 24 is made of solid metal and closes the inner periphery of the polymer discharge passage 27 defined by the support plates 25, 25. A ridge 24A is projected radially outwardly from the outer peripheral surface of the second hub ring 24. The ridge 24A guides polymer passed through the support plates 25, 25 so as to prevent the polymer from stagnated around the ridge 24A. A thin seal material 28 is inserted between each of the adjacent first and second hub rings 20, 24. Thus, after the leaf filters 13 and the supporting elements 14 have been stacked along the polymer conduit 12 and the hub rings 20, 24 have been fastened to the polymer conduit 12, the polymer in the conduit 12 flows only

- 10 -

into the leaf filters 13, and does not flow directly to the outside of the leaf filters 13. In the present embodiment, the two support plates 25, 25 are fixed to the second hub ring 24 only at the inner ends thereof and are not fixed to each other at the other portions. It should be noted, however, that a spacer may be inserted between and rigidly fixed to the support plates so that the support plates are rigidly connected to each other. In addition, an outer hub ring having a polymer passage may be attached to the outer periphery of the tow support plates 25, 25 to increase the rigidy of the entire supporting element.

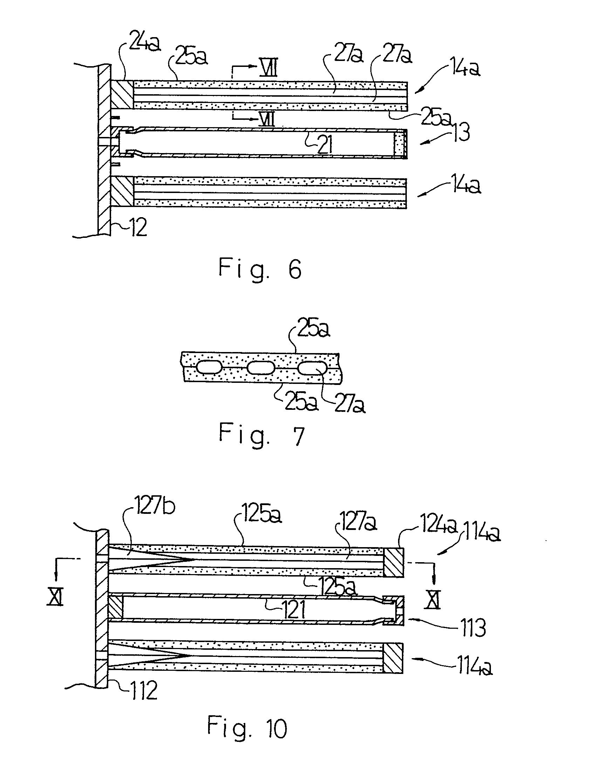

As mentioned above, the wire netting 26 disposed between the support plates 25, 25 serves as a support member which supports the support plates 25, 25 against the filtration pressure and keeps them spaced apart from each other to form the polymer passage 27 therebetween. The support member is not limited to the wire netting and other suitable members may be used as the support member. In addition, the support member may be rigidly fixed to the support plates by welding or brazing. Furthermore, the support member may be eliminated from the first embodiment. Fig. 6 shows a modified supporting element 14a in which no support member is inserted between the support plates. In the embodiment of Fig. 6, the support plates 25a, 25a are in direct contact with each other, and a number of recesses 27a (see Fig. 7) recessed from the inner periphery to the outer periphery of each support plate 25a are formed on the mating surface thereof. These recesses serve as polymer passages which allow polymer, filtrated by the filter

- 11 -

elements 21, 21 and passed through the support plates 25a, to flow to the outer periphery of the supporting element 14a. The dimension, shape, number, etc. of the resecces 27a are determined so that polymer would pass uniformly through the entire area of the support plate 25a, flow into the recesses and then flow out from the periphery of the supporting element. Recesses 27a need not be formed on both mating surfaces of a pair of support plates but should be formed on at least one of the mating surfaces. The supporting element 14a shown in Fig. 6 has an advantage that since the wire netting 26 need not be used, the number of parts can be decreased and the thickness of the element also can be decreased as compared with the supporting element 14 shown in Fig. 4.

In Fig. 1, each of the supporting elements 14A, 14B disposed at the top and bottom of the stack includes only a single support plate so that the wire netting 26 directly contacts the press plate 15 or casing 11. This construction is desirable because it prevents stagnation of polymer.

Method of using the filtration apparatus 10 will now be described hereafter. Referring to Fig. 1, molten polymer to be filtrated flows in the polymer conduit 12 at the center of the casing and then into the leaf filters 13 through the polymer inlet apertures 20A of the fist hub rings 20. Then, the polymer is filtrated during passing through the filter elements 21 of the leaf filters 13 through and the support plates 25 supporting the elements then, flows into the polymer discharge passage 27 defined by the support plates 25, 25,

- 12 -

then flows radially outwardly in the passage 27 into the casing 11 and flows out through the upper polymer discharge pipe 17. The filter element 21 captures foreign materials, especially solid particles in the polymer and removes them from the polymer. The support plate 25 made of sintered metal serves not only to support the filter element 21 against the filtration pressure but also to capture and cut foreign materials, especially gel like materials which have passed through the filter element 21 to effect kneading of the polymer. Thus, the combination of the filter element 21 and the support plate of sintered metal has the advantage of effective filtration and mixing of polymer.

When the filter elements are washed, the leaf filters 13 and the support plates 14 are removed from the polymer conduit 12 and then washed separately. Since the filter element 21 of the leaf filter is separated from the support plate 25, washing of the filter element is very easy. In addition, since the flow-out side of the filter element which is to completely be cleaned up is positioned on the outer side of the element, washing by the utrasonic or water jet would be effected satisfactorily. Further, the washing effect of the flow-out side can be easily inspected visually. On the other hand, the sintered metal constituting the support plate 25 is comparatively thick. Therefore, if pores within the sintered metal have been plugged by solid particles, removal of the plugged particles by washing is very difficult. However, most of solid particles in the polymer have been captured by the filter element 21 before reaching the support plate 25, so

- 13 -

0163742

that the pores of the support plate 25 would hardly be plugged by the solid particles in the polymer and the support plate would be repeatedly washed and re-used.  Thus, both of the filter element and support plate can be repeatedly washed and re-used, resulting in long service life.

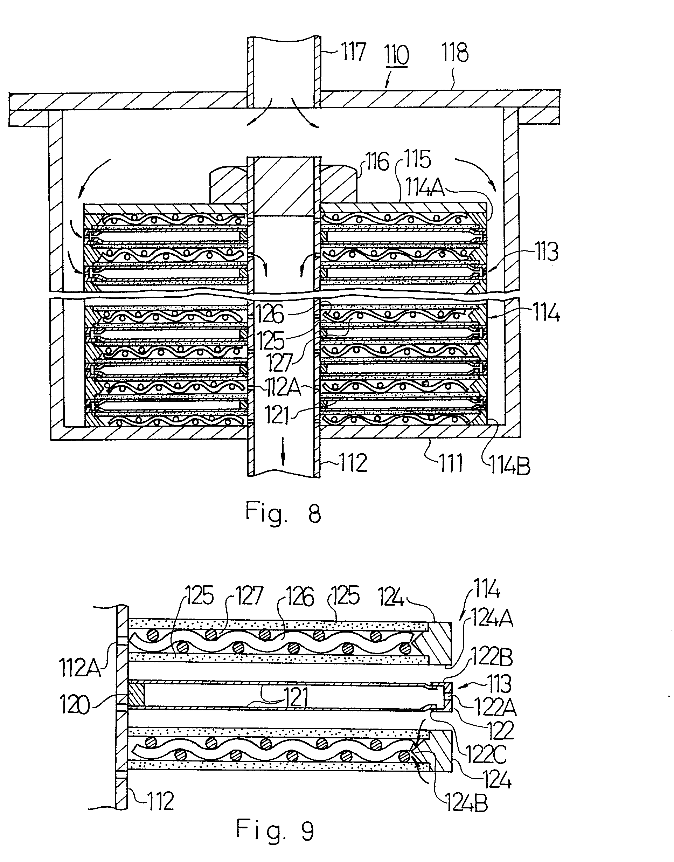

The embodiment of Fig. 1 has the construction in which the polymer flows from the center polymer conduit 12 into the leaf filter, passes through the filter elements of the leaf filters and the supporting elements into the interior of the casing 11 into the casing and then flows out through the polymer outlet pipe 17 at the upper end of the casing 11.  The flow pattern of polymer may be reversed.  More specifically, the filtration apparatus may be modified to a construction in which polymer flows at first into the casing, then into the leaf filters from the outer periphery thereof, passes through the filter elements into supporting elements, flows radially inwardly to the center polymer conduit and then flows out. Such embodiment is shown in Fig. 8.  The filtration apparatus 110 includes a casing 111 and a polymer conduit 112 extending vertically and substantially at the center of the casing.  On and around the polymer conduit 112 are alternatively received disc-shaped leaf filters 113 and disc-shaped supporting elements 114.  The leaf filters and supporting elements are fastened together by a press plate 115 and a nut 116 disposed at the top of teh stack.  The upper end of the casing 111 is closed by a cover 118 having a polymer supply pipe 117 attached to the central portion thereof.

As shown in Fig. 9 with an enlarged scale, the

- 14 -

0163742

disc-shaped leaf filter 113 includes an inner hub ring 120 having a central opening receiving the polymer conduit 112, an outer hub ring 122 having a number of polymer inlet apertures 122A, and a pair of circular filter elements 121, 121 attached to the inner and outer hub rings 120, 122. As the filter elements 121, a similar material for the filter element 21 used in the embodiment of Fig. 1 may be used. the outer hub ring 122 has upper and lower flat seal faces 122B and flanges 122C. The filter elements 121 are disposed to contact the inner surfaces of the flanges 122C and fixed thereto by welding or brazing. Such arrangement is desirable because the filter elements would not obstruct sealing effect between the outer hub ring 122 of the leaf filter 113 and an outer hub ring 124 of the supporting element 114, when the leaf filters and supporting elements are stacked and compressed to provide seal between the hub rings 122 and 124. It may be possible to provide the outer surfaces of the flanges of the hub ring 122 with stepped portions and fix the filter elements 121 onto the stepped portions. The inner hub ring 120 is made of solid metal and fixed to the filter elements 121, 121 by welding or brazing so as to close the inner peripheral end of the annular space defined by the filter elements.

The disc-shaped supporting element 114 includes the outer hub ring 124 of solid metal disposed at the outer periphery thereof, a pair of circular support plates 125, 125 fixed to the outer hub ring 124, for example by welding, and a wire netting 126 of large meshes disposed between the support plates. The support plate 125 also may be made of the same

- 15 -

material as that of the support plate 25 in the embodiment of Fig. 1. The outer hub ring 124 is made of solid metal having no aperture and closes the outer periphery of the polymer discharge passage 127 formed between the support plates 125, 125 by the netting 126. The hub ring 124 also has seal faces 124A facing to the seal faces 122B of the outer hub ring 122 of the leaf filter. An annular ridge 124B is projected radially outwardly from the inner peripheral surface of the hub ring 124. The ridge 124B acts to guide polymer passed through the support plate to prevent stagnation of polymer.

At the central portion of the supporting element 114 is formed an opening into which the polyemr conduit 112 is inserted. The inner periphery of the supporting element 114 is open so that the polymer passage 127 can communicate with the apertures 112A open at the peripheral surface of the polymer conduit 112. In the same manner as the inner hub ring of the leaf filter 113, an inner hub ring may be fixed to the support plates 125, 125 at the center thereof. The inner hub ring is formed with passages adapted to communicate with the apertures 112A of the polymer conduit 112.

Referring to Fig. 8, each of the uppermost and lowermost supporting elements 114A, 114B incluses only a single support plate so that the wire netting directly contacts the press plate 115 or casing 111. This construction is desirable for preventing stagnation of polymer. The leaf filters 113 and the supporting elements 114 are received on and around the polymer conduit 112 and fastened together by the press plate 115 as shown. In this connection, dimensions of components

- 16 -

0163742

are determined in such a manner that the outer hub rings 122 and 124 would be pressed together to provide a seal therebetween, which makes it possible to separate the polymer to be filtrated from the polymer after being filtrated. A suitable seal material may be inserted between the outer hub rings 122 and 124.

In the filtration apparatus 110 of the above construction, polymer flows from the polymer supply pipe 117 into the casing 111, and then into the leaf filters 113 from the outer periphery thereof through the polymer inlet apertures 122A. The polymer passes through the filter elements 121 of the leaf filters 113 which are supported by the supporting elements 114 and is filtrated. The filtrated polymer flows into the supporting elements 114, flows radially inwardly in the supporting elements to the polymer conduit 112 and flows out through the conduit towards a following apparatus. In washing operation, the leaf filters 113 and the supporting elements 114 may be removed from the polymer conduit 112 and washed separately in a manner same as in the embodiment of Fig. 1.

As mentioned above, in the filtration apparatus 110, polymer flows at first into the casing, is filtrated by the leaf filters and then flows into the center polymer conduit through which it flows out. The flow pattern is the same as that in the conventional filtration apparatus which is installed with the leaf filters having therewithin perforated plates and wire netting forming a gap between the plates. Thus, the filtration apparatus 110 has the advantage that it

- 17 -

can be easily replaced for the prior filtration apparatus in existing installations, with minor or no alteration in polymer flow pipings.

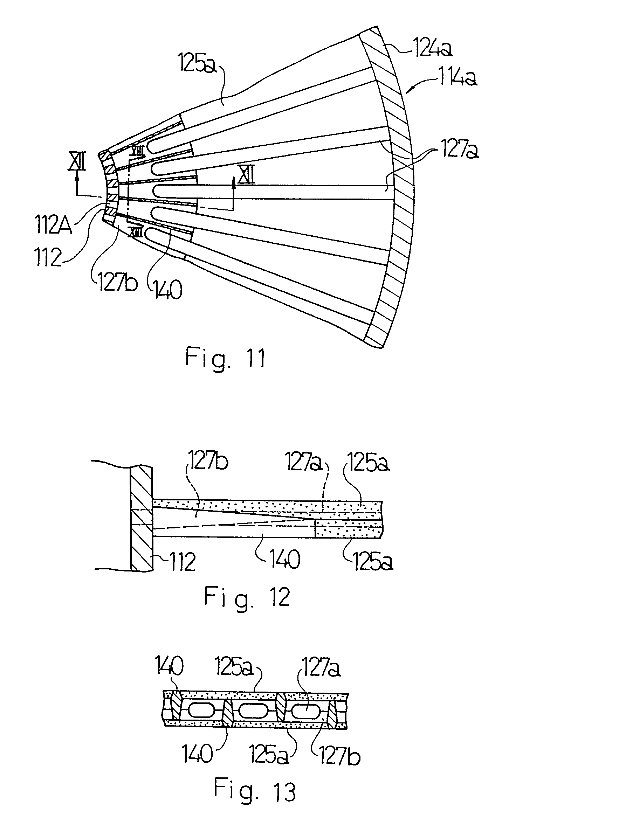

Fig. 10 shows an modification 114a of the disc-shaped supporting element used in the filtration apparatus 110 of Fig. 8. The supporting element 114a comprises a pair of directly contacted support plates 125a, 125a made of sintered metal, which are formed with a number of recesses 127a, 127b on the mating surfaces thereof. These recesses serves as polymer discharge passages which allow polymer to pass through the support plates 125a radially inwardly of the supporting element 114a. As clearly shown in Fig. 11, the recesses 127a extend radially and the recess 127b is formed along the supporting element in an annular shape. In the recess 127b are positioned reinforcing metal ribs 140, as shown in Figs. 12 and 13. When the support plate has a sufficient strength at the recess 127b, the rings 140 may be eliminated. The shape, position, dimensions, number, etc. of the recesses may be so determined that polymer would pass uniformly through the entire area of the support plates 115a, flow into the recesses and then be led into the polymer conduit 112a, smoothly. Various modifications of recesses may be made. The supporting element 114a may be substituted for the element 114 in Fig. 9 and has the advantage that the number of components can be decreased and the thickness thereof can be decreased as compared with the supporting element 114.

INDUSTRIAL APPLICABILITY

The polymer filtration apparatus of the present invention

- 18 -

is useful for removing foreign materials from molten polymers in film production process, especially melt spinning process of polyesters, polyamides or the like. More specifically, since the filter elements constituting the leaf filter which have fine pores difficult to be washed, especially at the polymer flow-out side of the filter elements can be easily and cleanly washed, and can be inspected visually, foreign materials held in the filter elements would hardly remain in the filter elements after washing. As a result, the filtration apparatus of the present invention is preferably used in production of polyester films for video, audio, condenser or the like, where even small foreign materials should be removed from polymer.

CLAIMS

1. A polymer filtration apparatus including a polymer conduit provided with a number of apertures open at a peripheral surface thereof, a number of disc-shaped leaf filters having a central opening through which said polymer conduit is inserted, said leaf filters being removably received on and around said polymer conduit, each of said leaf filters having a pair of circular filter elements which are not capable of withstanding filtration pressure and are axially spaced apart from each other, and a casing enclosing said leaf filters, characterized by disc-shaped supporting means (14, 14a, 114, 114a) removably sandwitched between adjacent leaf filters (13, 113), said supporting means having on axially opposite sides thereof bearing surfaces which are permeable to polymer and adapted to contact and support said filter elements (21, 121) of said leaf filters, and a discharge passage (27, 27a, 127, 127a) formed between said bearing surfaces to allow filtrated polymer to flow therethrough, whereby polymer to be filtrated flows from the interior of said leaf filter through said filter element and the bearing elements of said supporting means.

2. A polymer filtration apparatus according to claim 1, wherein said disc-shaped leaf filter (13) comprises a first hub ring (20) secured to inner peripheries of said pair of circular filter elements (21) and received on and around said polymer conduit (12), and closure means (22) fixed to outer peripheries of said pair of circular filter elements to close an outer peripheral end of a space defined by said filter

0163742

elements, said first hub ring having polymer inlet apertures (20A) adapted to communicate with said apertures (12A) of the periphery of said polymer conduit, and wherein said disc-shaped supporting means (14, 14a) comprises a second hub ring (24, 24a) received on around said polymer conduit and closing an inner peripheral end of said polymer discharge passage (27, 27A), whereby polymer flows from said polymer conduit (12) into said disc-shaped leaf filters, passes through said filter elements and then flows out from the outer periphery of said disc-shaped supporting means into said casing (11).

3.    A polymer filtration apparatus according to claim 2, wherein said disc-shaped supporting means (14, 14a) comprises a pair of substantially parallel circular support plates (25, 25a) each having an outer surface constituting each of said bearing surfaces.

4.    A polymer filtration apparatus according to claim 3, wherein said circular support plate (25) is perforated and having a number of through apertures.

5.    A polymer filtration apparatus according to claim 3, wherein said circular support plate (25, 25a) is made of a porous sintered metal.

6.    A polymer filtration apparatus according to claim 3, wherein said circular support plate (25, 25a) is made of a porous sintered metal having larger average pore size than that of said filter element (21).

7.    A polymer filtration apparatus according to claim 6, wherein said sintered metal constituting said circular support plate (25, 25a) is made by sintering metal particles of irregular shape having sharp edges.

8.  A polymer filtration apparatus according to any one of claims 3 to 7, wherein a support member (26) is inserted between said pair of circular support plates (25) to spacedly support them so as to form said polymer passage (27) therebetween.

9.  A polymer filtration apparatus according to claim 8, wherein said support member (26) is constituted by a wire netting (26).

10.  A polymer filtration apparatus according to any one of claims 5 to 7, wherein said pair of circular support plates (25a) are disposed in contact with each other, at least one of mating faces formed in said circular support plates being provided with recesses (27a) constituting said polymer passage.

11.  A polymer filtration apparatus according to claim 1, wherein said disc-shaped leaf filter (113) comprises an outer hub ring (122) secured to and closing the outer peripheries of the two circular filter elements (112) and having polymer inlet apertures (122A), and closure means (120) fixed to the inner peripheries of said two circular filter elements to close an inner peripheral end of a space defined by said filter elements, and wherein said disc-shaped supporting means (114, 114a) comprises an outer hub ring (114, 114a) closing an outer peripheral end of said polymer discharge passage (127, 127a) formed within said disc-shaped supporting means, whereby polymer in said casing (111) flows into the disc-shaped leaf

- 22 -

filters from the outer periphery thereof, passes through the filter elements and then flows out from the inner periphery of the disc-shaped supporting means into said polymer conduit (112).

12. A polymer filtration apparatus according to claim 11, wherein said disc-shaped supporting means (114, 114a) comprises a pair of substantially parallel circular support plates (125, 125a) each having an outer surface constituting said bearing surface.

13. A polymer filtration apparatus according to claim 12, wherein said circular support plate (125) is perforated and having a number of through apertures.

14. A polymer filtration apparatus according to claim 12, wherein said circular support plate (125, 125a) is made of a porous sintered metal.

15. A polymer filtration apparatus according to claim 12, wherein said circular support plate (125, 125a) is made of a porous sintered metal having larger average pore size than that of said filter element.

16. A polymer filtration apparatus according to claim 15, wherein said sintered metal constituting said circular support plate (125, 125a) is made by sintering metal particles of irregular shape having sharp edges.

17. A polymer filtration apparatus according to any one of claim 12 to 16, wherein a support member (126) is inserted between a pair of said circular support plates (125) to spacedly support them so as to form said polymer passage (127) therebetween.

- 23 -

18. A polymer filtration apparatus according to claim 17, wherein said support member is constituted by a wire netting (126).

19. A polymer filtration apparatus according to any one of claims 14 to 16, wherein said pair of circular support plates (125a) are disposed in contact with each other, at least one of mating faces formed in said circular support plates being provided with recesses (127a, 127b) constituting said polymer passage.

Fig. 1

Fig. 4

2

Fig. 2

Fig. 3

Fig. 5

3

Fig. 6

Fig. 7

Fig. 10

4

Fig. 8

Fig. 9

5

Fig. 11

Fig. 12

Fig. 13

# INTERNATIONAL SEARCH REPORT

International Application No. PCT/JP84/00544

| I. CLASSIFICATION OF SUBJECT MATTER (if several classification symbols apply, indicate all) ³ |
|---|
| According to International Patent Classification (IPC) or to both National Classification and IPC |
| Int. Cl³ B01D29/34, 35/02, B29B1/12, D01D1/10 |

| II. FIELDS SEARCHED |
|---|

**Minimum Documentation Searched ⁴**

| Classification System | Classification Symbols |
|---|---|
| IPC | B01D29/34, 35/02, B29B1/12, D01D1/10 |

**Documentation Searched other than Minimum Documentation to the Extent that such Documents are Included in the Fields Searched ⁵**

| | |
|---|---|
| Jitsuyo Shinan Koho | 1926 – 1984 |
| Kokai Jitsuyo Shinan Koho | 1971 – 1984 |

| III. DOCUMENTS CONSIDERED TO BE RELEVANT ¹⁴ | | |
|---|---|---|
| Category* | Citation of Document, ¹⁶ with indication, where appropriate, of the relevant passages ¹⁷ | Relevant to Claim No. ¹⁸ |
| A | JP, B2, 57-29243 (Toray Industries, Inc.), 22 June 1982 (22. 06. 82), Column 5, line 27 to column 6, line 36, Fig. 3(A), Fig. 3(B) | 1 – 19 |
| A | JP, Y1, 32-6889 (Muto Mitsuyoshi), 8 July 1957 (08. 07. 57) | 1 – 10 |
| A | JP, Y1, 33-11003 (Toray Industries, Inc.), 29 July 1958 (29. 07. 58) | 1 – 10 |
| A | JP, Y1, 43-10146 (higuchi Hiroto), 2 May 1968 (02. 05. 68), Column 1, 15th line from the bottom to column 2, line 38, Fig. 2, Fig. 3 | 1 – 10 |

* Special categories of cited documents: ¹⁵
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step
"Y" document of particular relevance; the claimed invention cannot be considered to involve an inventive step when the document is combined with one or more other such documents, such combination being obvious to a person skilled in the art
"&" document member of the same patent family

| IV. CERTIFICATION | |
|---|---|
| Date of the Actual Completion of the International Search ² | Date of Mailing of this International Search Report ² |
| December 14, 1984 (14. 12. 84) | December 24, 1984 (24. 12. 84) |
| International Searching Authority ¹ | Signature of Authorized Officer ²⁰ |
| Japanese Patent Office | |

Form PCT/ISA/210 (second sheet) (October 1981)